# EUROPÄISCHE PATENTSCHRIFT

(11) **EP 3 929 439 B1**
(45) Veröffentlichungstag und Bekanntmachung des Hinweises auf die Patenterteilung: **17.06.2026**
(21) Anmeldenummer: 21174344.8
(22) Anmeldetag: 18.05.2021
(51) Int. Cl.: F04C 2/10, F04C 2/344, F04C 23/00

(54) **AXIALE DRUCKENTLASTUNG IN GLEITLAGERN VON PUMPEN**
AXIAL PRESSURE RELIEF IN BEARINGS OF PUMPS
DÉCHARGE AXIALE DE PRESSION DANS LES PALIERS LISSES DES POMPES

(30) Priorität: 25.06.2020 DE 102020116822
(43) Veröffentlichungstag der Anmeldung: 29.12.2021
(73) Patentinhaber: Schwäbische Hüttenwerke Automotive GmbH, 73433 Aalen (DE)
(72) Erfinder: Welte, Claus, 88326 Aulendorf (DE); Meinig, Uwe, 88348 Bad Saulgau (DE)
(74) Vertreter: SSM Sandmair

(56) Entgegenhaltungen:
- EP-A2- 2 921 702
- CN-A- 106 168 215
- CN-A- 106 704 198
- CN-A- 111 089 050
- DE-A1- 102016 121 241
- DE-A1- 102016 210 821
- DE-A1- 102016 213 611
- DE-A1- 19 952 167

## Beschreibung

Die Erfindung betrifft die axiale Druckentlastung in Gleitlagern von Pumpen, insbesondere Ölpumpen, über einen Durchgang in dem Pumpengehäuse und/oder in der Pumpen- oder Antriebswelle, der beispielsweise als zentrale Bohrung in der Pumpen- oder Antriebswelle ausgeführt sein kann. Ferner betrifft die Erfindung eine Pumpe, wie etwa eine Schmierölpumpe, Kühlmittelpumpe, Getriebepumpe oder Vakuumpumpe, mit einer solchen Einrichtung zur Druckentlastung. Die Pumpe kann einflutig oder mehrflutig und/oder einhubig oder mehrhubig, insbesondere ein- oder mehrkreisig sein. Sie kann als Getriebepumpe zur Versorgung eines Getriebes, beispielsweise eines Automatikgetriebes oder Lenkgetriebes, eines Fahrzeugs oder eines Getriebes einer Windkraftanlage, mit Druckfluid verwendet werden. In einer anderen Anwendung kann sie als Schmier- und/oder Kühlmittelpumpe zur Versorgung einer Brennkraftmaschine beispielsweise eines Antriebsmotors eines Fahrzeugs, mit Schmier- und/oder Kühlmittel, insbesondere Schmieröl, verwendet werden. Eine kombinierte Verwendung als Schmierölpumpe und als Getriebepumpe ist ebenfalls denkbar, insbesondere in Ausgestaltungen, in denen die Pumpe mehrflutig ist. Die Pumpe kann vorteilhafterweise in sogenannter Cartridge-Bauweise ausgeführt sein. Sie kann daher einen Pumpeneinsatz aufweisen, der in einen von einem Aufnahmegehäuse gebildeten Aufnahmeraum als Einheit einsetzbar oder eingesetzt ist. Ferner kann die Pumpe zur Schmierung und/oder Kühlung eines Elektromotors, der beispielsweise einen Antriebsmotor oder Hilfsantriebmotor eines Kraftfahrzeugs bildet, verwendet werden.

Bei Ölpumpen und speziell doppelhubigen Flügelzellenpumpen beispielsweise für den Einbau in Automatik- und Doppelkupplungsgetrieben wird die Pumpenwelle vielfach unter Bauraum- und Kostengesichtspunkten über Gleitlagerungen gelagert. Bei derartigen Gleitlagerungen kann, abhängig von den im Betrieb herrschenden Lagerlasten, die Welle ohne eine zusätzliche Lagerbuchse mit dem Werkstoff der Lagerbohrung oder aber bei hohen Lagerlasten und der Gefahr des Betriebs in der Mischreibung eine separate Lagerbuchse aus einem für den vorliegenden Fall geeigneten Lagerwerkstoff gelagert werden. Insbesondere bei Pumpen, die bei einem höheren Druckniveau von mehreren 10 bar fördern und deren Pumpenwelle nicht zu beiden Seiten aus dem Pumpengehäuse ins Freie ragt, ergeben sich besondere Anforderungen an die konstruktive Gestaltung der Pumpe aus dem Umstand, dass wegen der voneinander abweichenden, mit dem Betriebsdruck der Pumpe beaufschlagten Stirnflächen von Antriebswelle und Laufzeug ein wesentlicher Achsschub entsteht, der je nach gewähltem Axiallagerungskonzept von der Pumpenwelle oder dem Pumpenrotor abgefangen werden muss. Dieser Achsschub erzeugt ein Reibmoment, das Verschleiß an den entsprechenden Abstützflächen verursachen kann, sowie die Antriebsleistung der Pumpe erhöht und damit die Wirkungsgrade der Pumpe verringert. Um den Achsschub auf die vom Betriebsdruck beaufschlagte Stirnfläche der Pumpenwelle zu minimieren, ist es üblich, die als Sackloch ausgeführte, der Antriebsseite abgewandten Lagerbohrung der Pumpenwelle über eine beispielsweise schräge Entlastungsbohrung mit dem Saugbereich der Pumpe zu verbinden. Ein Nachteil dieser Lösung besteht darin, dass die schräg in das Gleitlager mündende Entlastungsbohrung eine in der Großserie nur mit erheblichem Aufwand entgratbare Verschneidungsgeometrie erzeugt, welche die Gefahr birgt, dass sich trotz eines relativ aufwendigen Entgratungsprozesses - beispielsweise mittels Kugelfräser - Grate umlegen oder neue Grate bilden, die sich über die Dauer des Betriebs der Pumpe lösen und zu Betriebsstörungen im Ölkreislauf bzw. im Steuerblock des Getriebes führen können. Da die Richtung der resultierenden, vom genannten Gleitlager abzustützende Radialkräfte, insbesondere bei Zweikreispumpen, im Betrieb erheblich variieren kann, verringert sich durch die genannte, zum Saugbereich führende Druckentlastungsbohrung praktisch auch die Tragfähigkeit des Lagers, da ein wesentlicher Druckaufbau im zylindermantelförmigen Bereich um die Verschneidungsgeometrie mit der Entlastungsbohrung kaum möglich ist und zudem auch die konstruktiven bzw. bearbeitungstechnischen Freiheitsgrade für die Festlegung der physikalisch optimalen Winkelpositionierung der Mündung der Entlastungsbohrung in das Gleitlager in der Regel eingeschränkt sind.

Aus der DE 10 2019 132 729 A1 ist eine Pumpe mit einer Antriebswelle bekannt, wobei das der Antriebsseite abgewandte Ende der Antriebswelle in einer als Sackloch ausgebildeten Lagerbohrung eines als Druckplatte ausgebildeten Gehäuseteils angeordnet ist. Die Antriebswelle wird mittels Gleitlager an der Druckplatte gelagert. Zwischen einer von der Druckplatte gebildeten Wand (Grund des Sacklochs) und dem in der Druckplatte gelagerten Ende der Antriebswelle ist ein Zwischenraum gebildet. Im Betrieb der Pumpe kann - wenn keine Druckentlastung für diesen Zwischenraum vorgesehen ist - sich Druck in dem Zwischenraum aufbauen, wodurch ein axialer Schub auf die Antriebswelle ausgeübt wird.

Die EP 2 921 702 A2, DE 199 52 167 A1, CN 106 704 198 A, CN 106 168 215 A, DE 10 2016 210 821 A1 und CN 111 089 050 A beschreiben Pumpen mit einer Antriebswelle, die eine zentrische Bohrung aufweist. Bei der Pumpe aus der DE 10 1016 121 241 A1 ist ein Rotor auf einem feststehenden Stator, der als zylindrischer Zapfen ausgebildet ist und eine zentrische Sackbohrung aufweist, drehbar gelagert. Auch die DE 10 2016 213 611 A1 zeigt einen Achsbolzen, auf dem ein Rotor drehbar gelagert ist.

Der Erfindung liegt die Aufgabe zugrunde, eine kostengünstige und in der Großserie einfach herstellbare Pumpe anzugeben, welche einen axialen Schub der Pumpenwelle im Betrieb verringert oder vermeidet.

Die Aufgabe wird mit der Pumpe mit den Merkmalen des Anspruchs 1 gelöst. Vorteilhafte Weiterbildungen werden in den abhängigen Ansprüchen, der Beschreibung und den Figuren angegeben.

Die Erfindung geht von einer Pumpe, insbesondere einer Flügelzellenpumpe aus. Die Pumpe kann als Cartridgepumpe bzw. Pumpe in Cartridge-Bauweise ausgestaltet sein. Ein Pumpeneinsatz kann dementsprechend in einen von einem Aufnahmegehäuse gebildeten, beispielsweise topfförmigen, Aufnahmeraum als Einheit einsetzbar oder eingesetzt sein.

Die Pumpe umfasst eine Antriebswelle, die auch als Pumpenwelle bezeichnet werden kann, mit einem Rotor. Der Rotor kann von der Antriebswelle gebildet sein oder, was bevorzugt ist, um die Drehachse der Antriebswelle verdrehfest mit der Antriebswelle gefügt sein, beispielsweise mittels einer Welle-Nabe-Verbindung. Eine Drehung der Antriebswelle um ihre Drehachse bewirkt somit eine Drehung des Rotors um die Drehachse.

Die Pumpe umfasst ferner ein erstes Gehäuseteil und zweites Gehäuseteil, zwischen denen eine Pumpenkammer gebildet ist, in der der Rotor angeordnet ist. Das erste Gehäuseteil und das zweite Gehäuseteil begrenzen die Pumpenkammer in Richtung der Drehachse. Das erste Gehäuseteil kann beispielsweise als Druckplatte ausgestaltet sein, welche insbesondere mindestens einen Auslasskanal aufweist oder in dem mindestens ein Auslasskanal gebildet ist. Das zweite Gehäuseteil kann beispielsweise als Montageplatte ausgebildet sein, welche an einem Aufnahmegehäuse befestigt werden kann oder befestigt ist. Das zweite Gehäuseteil bzw. die Montageplatte weist eine Befestigungseinrichtung, insbesondere einen Befestigungsflansch, zur Befestigung des zweiten Gehäuseteils an dem Aufnahmegehäuse auf. Beispielsweise kann der Befestigungsflansch oder allgemein das zweite Gehäuseteil, mittels mindestens eines Schraubenbolzens an dem Aufnahmegehäuse befestigt oder angeschraubt werden. Der Befestigungsflansch kann z.B. zwischen einem Kopf des Schraubenbolzens und dem Aufnahmegehäuse eingeklemmt sein oder werden.

Die Pumpenkammer kann umfangsseitig von einem Konturring umgeben sein. Insbesondere kann eine Innenumfangsfläche des Konturrings eine Innenkontur bilden und die Pumpenkammer umfangsseitig begrenzen. Der Konturring kann als separates Teil zwischen dem ersten und zweiten Gehäuseteil eingefasst sein. Optional kann der Konturring entweder mit dem ersten Gehäuseteil oder dem zweiten Gehäuseteil einteilig gebildet sein.

Der Rotor kann Ausnehmungen, insbesondere Führungen wie z.B. schlitzförmige Ausnehmungen oder Führungen, aufweisen, in denen Förderelemente, wie z.B. Flügel, Schieber oder Rollen, radial zur Drehachse bewegbar, insbesondere verschiebbar aufgenommen sind. Die Förderelemente sind so von dem Rotor aufgenommen oder gelagert, dass sie sich mit dem Rotor um seine Drehachse mitdrehen. Insbesondere ist jedes der Förderelemente mit seiner Führung mit einem einzigen translatorischen Freiheitsgrad verschiebbar gelagert.

Das erste Gehäuseteil, das zweite Gehäuseteil und der Konturring können somit eine Pumpenkammer einfassen bzw. begrenzen, in welcher der Rotor und die Förderelemente angeordnet sind. Radial zwischen dem Konturring und dem Rotor, der zwischen dem ersten und dem zweiten Gehäuseteil drehbar eingefasst ist, kann mindestens eine Förderkammer gebildet sein, wie z.B. eine erste Förderkammer und eine zweite Förderkammer bei einer doppelhubigen oder zweiflutigen Pumpe.

Zwischen benachbarten Förderelementen ist jeweils eine Förderzelle gebildet, die umfangsseitig von der Innenumfangsfläche des Konturrings und in Richtung der Drehachse von dem ersten Gehäuseteil auf einer Seite und von dem zweiten Gehäuseteil auf der anderen Seite begrenzt wird und deren Volumen sich in Abhängigkeit von der Drehposition des Rotors um seine Drehachse verändert. Die Pumpe weist eine Vielzahl von Förderelementen und somit eine insbesondere gleiche Vielzahl von Förderzellen auf, die zwischen den Förderelementen gebildet sind.

Der Innenumfang des Konturrings weist eine Kontur auf, an welcher die Förderelemente bei einer Drehung des Rotors entlanggleiten. Die Kontur ist insbesondere so ausgebildet, dass sich die Volumina aufgrund der Drehung des Rotors durch die Förderkammer bewegenden Förderzellen zunächst vergrößern und anschließend verkleinern. Bei einer vollständigen Umdrehung des Rotors werden die Förderelemente zumindest einmal von der Drehachse weg und zur Drehachse hinbewegt. Die Pumpe kann z.B. doppelhubig und/oder zweiflutig, d.h. mit einer ersten Förderkammer und einer zweiten Förderkammer ausgebildet sein, die von den Förderelementen bzw. in Förderzellen bei einer vollen Umdrehung jeweils einmal durchlaufen werden. D.h., dass die Förderelemente bei einer vollständigen Umdrehung abwechselnd zweimal von der Drehachse weg und zweimal zu der Drehachse hin bewegt werden. Während einer Drehung des Rotors findet zunächst eine Volumenvergrößerung einer Förderzelle und anschließend eine Volumenverkleinerung dieser Förderzelle statt.

Die Pumpe oder der Pumpeneinsatz kann mindestens einen Einlasskanal aufweisen, der in den Bereich der Förderkammer mündet, in dem Volumenvergrößerung der Förderzelle stattfindet, und mindestens einen Auslasskanal aufweisen, der in den Bereich der Förderkammer mündet, in dem die Volumenverkleinerung dieser Förderzelle stattfindet. Durch die Volumenvergrößerung der Förderzelle wirkt der mindestens eine Einlasskanal als Saugkanal. Durch die Volumenverkleinerung wirkt der mindestens eine Auslasskanal als Druckkanal. Eine einhubige Pumpe kann z.B. einen Einlasskanal und einen Auslasskanal aufweisen. Eine doppelhubige oder zweiflutige Pumpe kann z.B. einen gemeinsamen Einlasskanal für die erste und zweite Förderkammer und einen ersten Auslasskanal für die erste Förderkammer und einen davon separaten zweiten Auslasskanal für die zweite Förderkammer aufweisen. In einer Alternative kann der Pumpeneinsatz einen ersten Einlasskanal für die erste Förderkammer und einen davon separaten zweiten Einlasskanal für die zweite Förderkammer und einen ersten Auslasskanal für die erste Förderkammer und einen davon separaten zweiten Auslasskanal für die zweite Förderkammer oder einen gemeinsamen Auslasskanal für die erste und zweite Förderkammer aufweisen. Mit dem über die erste Förderkammer geförderten Fluid können z.B. andere oder die gleichen Verbraucher versorgt werden als mit dem über die zweite Förderkammer geförderten Fluid. Bei der Versorgung unterschiedlicher Verbraucher können unterschiedliche Druckniveaus zwischen dem ersten Auslasskanal und dem zweiten Auslasskanal bzw. zwischen einem ersten Druckraum, in den der erste Auslasskanal mündet, und einem zweiten Druckraum, in den der zweite Auslasskanal mündet, entstehen. Die Förderelemente und/oder der Rotor bilden mit dem ersten Gehäuseteil und dem zweiten Gehäuseteil jeweils einen Dichtspalt. Der mindestens eine Einlasskanal kann mit einem Fluidvorratsbehälter, wie z.B. einem Ölbehälter, verbunden sein oder werden, insbesondere in fluidkommunizierender Verbindung stehen. Zum Beispiel kann der mindestens eine Saugkanal in einen Saugraum münden, der z.B. zwischen dem Aufnahmegehäuse und dem Pumpeneinsatz gebildet sein kann, insbesondere zwischen einer Innenumfangswand des Aufnahmegehäuses und dem Pumpeneinsatz, wie z.B. dem Konturring. Der mindestens eine Auslasskanal kann mit mindestens einem Fluidverbraucher verbunden sein, wie z.B. einem Getriebe in fluidkommunizierender Verbindung stehen. Vorzugsweise ist der mindestens eine Auslasskanal, insbesondere die mindestens zwei Auslasskanäle, in dem ersten Gehäuseteil gebildet. Der mindestens eine Auslasskanal, insbesondere die mindestens zwei Auslasskanäle, münden vorteilhaft mit einer, insbesondere mit jeweils einer, Öffnung auf die Seite des ersten Gehäuseteils, welche von der Pumpenkammer abgewandt ist.

Die Pumpe kann ein Drehlager, insbesondere ein Gleitlager, über das die Antriebswelle um ihre Drehachse drehbar an dem ersten Gehäuseteil gelagert ist, aufweisen. Insbesondere kann das Gleitlager von dem ersten Gehäuseteil oder einer in das erste Gehäuseteil eingesetzten Lagerbuchse gebildet sein. Optional kann ein zweites Drehlager vorgesehen sein, über das die Antriebswelle um ihre Drehachse drehbar an den zweiten Gehäuseteil gelagert ist. Das als Gleitlager ausgebildete zweite Drehlager kann beispielsweise von dem zweiten Gehäuseteil oder einer in das zweite Gehäuseteil eingesetzten Lagerbuchse gebildet sein.

In Ausführungsformen kann die Antriebswelle einen insbesondere länglichen, sich entlang der Drehachse der Antriebswelle erstreckenden Durchgang aufweisen. Der Durchgang kann beispielsweise als Bohrung ausgebildet sein. Der Durchgang weist eine erste Öffnung und eine zweite Öffnung auf. Das erste Drehlager ist zwischen der Pumpenkammer und der ersten Öffnung angeordnet. Das erste Drehlager ist vorzugsweise zwischen einem im ersten Gehäuseteil angeordneten Ende der Antriebswelle und der Pumpenkammer angeordnet oder gebildet. Dadurch wird erreicht, dass sich vor der ersten Öffnung bzw. vor dem im ersten Gehäuseteil angeordneten Ende der Antriebswelle kein Druck aufbauen kann, da er über den Durchgang abgebaut wird. Beispielsweise kann über das erste Drehlager Fluid oder sogenanntes Leckagefluid aus der Pumpenkammer, in den Bereich, insbesondere einem Hohlraum oder Spalt, vor der ersten Öffnung fließen, wodurch sich - wenn die Welle keinen Durchgang aufweisen würde - Druck aufbauen könnte. Durch den Durchgang kann das Leckagefluid abgeführt bzw. Druck abgebaut werden.

In alternativen Ausführungsformen kann wenigstens eines aus erstem Gehäuseteil, zweitem Gehäuseteil, Konturring oder einem Positionierelement, mit dem das erste Gehäuseteil und das zweite Gehäuseteil und optional der Konturring, relativ zueinander um die Drehachse der Antriebswelle positioniert werden können, einen Durchgang oder einen Teil davon aufweisen. Beispielsweise können das erste Gehäuseteil die erste Öffnung und das zweite Gehäuseteil oder das Positionierelement die zweite Öffnung aufweisen. Die erste Öffnung kann in einen vor dem im ersten Gehäuseteil angeordneten Ende der Antriebswelle angeordneten Bereich, insbesondere Hohlraum oder Spalt, münden. Beispielsweise kann über das erste Drehlager Fluid oder sogenanntes Leckagefluid aus der Pumpenkammer, in den Bereich, insbesondere den Hohlraum oder Spalt, fließen, wodurch sich - ohne einen Durchgang zur Druckentlastung - Druck aufbauen könnte. Durch den Durchgang kann das Leckagefluid abgeführt bzw. Druck abgebaut werden.

Der Durchgang ist vorzugsweise als Entlastungsdurchgang oder Entlastungskanal ausgebildet. Vorzugsweise ist der Durchgang mit seiner ersten Öffnung fluidisch mit dem vor dem im ersten Gehäuseteil angeordneten Ende der Antriebswelle angeordneten Bereich, insbesondere dem Hohlraum oder Spalt, verbunden. Die erste Öffnung ist insbesondere an einem im ersten Gehäuseteil angeordneten Ende der Antriebswelle in der Antriebswelle gebildet.

Beispielsweise kann der Durchgang mit der zweiten Öffnung auf die Seite des zweiten Gehäuseteils münden, welche von der Pumpenkammer abgewandt ist. Somit kann Leckagefluid auf die Seite des zweiten Gehäuseteils abgeführt werden, welche von der Pumpenkammer abgewandt ist. Alternativ oder zusätzlich kann der Durchgang mit der zweiten Öffnung in einen Entlastungsraum oder die Umgebung der Pumpe oder die außerhalb eines Aufnahmeraums eines Aufnahmegehäuses befindliche Umgebung eines Pumpeneinsatzes münden. Der Pumpeneinsatz kann in dem Aufnahmeraum angeordnet sein oder werden, insbesondere dann, wenn die Pumpe in Cartridge-Bauweise ausgeführt ist. Vorzugsweise ist der Durchgang mit seiner zweiten Öffnung fluidisch mit dem Entlastungsraum oder der Umgebung der Pumpe oder des Pumpeinsatzes verbunden. Vorteilhaft ragt die Pumpenwelle oder Antriebswelle axial aus dem zweiten Gehäuseteil heraus. Die zweite Öffnung ist insbesondere an einem aus dem zweiten Gehäuseteil axial herausragenden Ende der Antriebswelle in der Antriebswelle gebildet.

Vorzugsweise erstreckt sich der Durchgang von seiner ersten Öffnung bis zu seiner zweiten Öffnung. Das erste Drehlager und/oder das zweite Drehlager sind vorteilhaft axial zwischen der ersten Öffnung und der zweiten Öffnung des Durchgangs angeordnet. Vorzugsweise ist die Pumpenkammer axial zwischen der ersten Öffnung und der zweiten Öffnung des Durchgangs angeordnet.

Beispielsweise kann die Pumpe einen zwischen einem Grund, der auch als Boden bezeichnet werden kann, eines von dem ersten Gehäuseteil gebildeten Sacklochs und dem in dem ersten Gehäuseteil, insbesondere in dem Sackloch, angeordneten ersten Ende der Antriebswelle einen, beispielsweise spaltförmigen, zylindrischen oder konischen, Hohlraum aufweisen. Der Durchgang mündet mit seiner ersten Öffnung in den Hohlraum. Das erste Gehäuseteil, insbesondere die mindestens eine Innenfläche des Sacklochs, kann den Hohlraum somit umfangs- und/oder stirnseitig einfassen und begrenzen. Ferner kann das erste Ende der Antriebswelle den Hohlraum begrenzen. Der Grund des Sacklochs kann beispielsweise als ebene oder konische Fläche ausgebildet sein. Der Grund und das erste Ende der Antriebswelle weisen zueinander.

Bevorzugt ist das erste Drehlager zwischen der Pumpenkammer und dem Hohlraum angeordnet. Somit kann Leckagefluid, das aus der Pumpenkammer über das erste Drehlager in den Hohlraum fließt, über die erste Öffnung, den Durchgang und insbesondere die zweite Öffnung abgeführt werden. Hierdurch kann verhindert werden, dass aufgrund eines im Hohlraum aufbauenden Drucks Axialschub auf die Antriebswelle ausgeübt wird.

Der Durchgang dient somit als Druckentlastungskanal. Wie gesagt kann der Durchgang in Ausführungsformen als Bohrung, insbesondere als zentral angeordnete Bohrung, in der Antriebswelle ausgeführt sein. Beispielsweise kann der Durchgang von dem einen Ende bis zu dem anderen Ende einmal oder mehrfach hinsichtlich seines Durchmessers abgestuft ausgeführt sein.

In Weiterbildungen kann die Antriebswelle auf der Seite des zweiten Gehäuseteils, welche der Pumpenkammer abgewandt ist, eine, beispielsweise in dem Entlastungsraum oder der Umgebung des Pumpe oder des Pumpeinsatzes angeordnete, Verbindungsstruktur aufweisen, welche angepasst ist, mit einer korrespondierenden Gegenstruktur einer Nabe zur Bildung einer Welle-Nabe-Verbindung verbunden zu werden. An die Verbindungsstruktur lässt sich vorteilhaft ein, beispielsweise in dem Entlastungsraum oder der Umgebung der Pumpe oder des Pumpeinsatzes angeordnetes, Antriebselement, welches eine entsprechende Nabe aufweist, anbringen. Bei dem Antriebselement kann es sich z.B. um ein Zahnrad, ein Ritzel, eine Riemenscheibe, oder ein Getriebeelement, beispielsweise eines Planetengetriebes handeln. Ein Getriebeelement eines Planetengetriebes kann beispielsweise ein Planetenträger, ein Sonnenrad oder ein Hohlrad sein. Die Nabe bzw. das Antriebselement können mit der Antriebswelle beispielsweise mittels der Welle-Nabe-Verbindung um die Drehachse der Antriebswelle verdrehfest verbunden sein. Eine Drehung des Antriebselements um die Drehachse bewirkt somit eine Drehung der Antriebswelle um die Drehachse.

Optional münden in den sich in der Antriebswelle entlang der Drehachse erstreckenden Durchgang ein oder mehrere quer oder radial zur Drehachse oder Längsrichtung des Durchgangs verlaufende Kanäle, insbesondere Bohrungen, der oder die eine Druckentlastung und/oder Schmierung einer Welle-Nabe-Verbindung bewirken.

Beispielsweise kann die Pumpe, insbesondere die Antriebswelle so ausgebildet sein, dass über den Durchgang abgeführtes Fluid an die Welle-Nabe-Verbindung geführt wird, mit der die Nabe des Antriebselements und die Antriebswelle, insbesondere antriebsseitig, gefügt sind oder werden können. Hierdurch kann die Welle-Nabe-Verbindung geschmiert werden, um dort Verschleiß bzw. Reibrost zu verhindern. Beispielsweise kann die Antriebswelle so ausgebildet sein, dass das, insbesondere während des Betriebs der Pumpe, über den Durchgang abgeführte Fluid an die Verbindungsstruktur, insbesondere zwischen die Verbindungsstruktur und die Nabe, gefördert werden kann. Die Antriebswelle kann eine oder mehrere quer zur Drehachse oder zur Längsrichtung des Durchgangs angeordnete Bohrungen aufweisen, welche in den Durchgang und die Verbindungsstruktur münden, wodurch Fluid aus dem Durchgang über die mindestens eine Querbohrung an die Verbindungsstruktur geführt werden kann.

In Weiterbildungen kann die Antriebswelle so ausgebildet sein, dass über den Durchgang abgeführtes Fluid oder Leckagefluid an die Welle-Nabe-Verbindung zwischen Antriebswelle und Rotor geführt werden kann. Beispielsweise kann die Antriebswelle eine oder mehrere quer zur Drehachse oder zur Längsrichtung des Durchgangs angeordnete Bohrungen aufweisen, durch die über den Durchgang abgeführtes Fluid in die Welle-Nabe-Verbindung geführt werden kann. Beispielsweise kann die mindestens eine Bohrung in den Durchgang und in die Welle-Nabe-Verbindung münden. Hierdurch können die Welle-Nabe-Verbindung geschmiert und Verschleiß bzw. Reibrost verhindert werden.

In Weiterbildungen kann die Antriebswelle eine oder mehrere quer zur Drehachse oder Längsrichtung des Durchgangs angeordnete Bohrungen aufweisen, welche an den Außenumfang der Antriebswelle und den Durchgang münden. Beispielsweise kann die mindestens eine Bohrung in einen Bereich an den Außenumfang der Antriebswelle münden, der zwischen der Pumpenkammer und einer Wellendichtung, insbesondere einem Radialwellendichtring, oder zwischen dem Rotor und der Wellendichtung angeordnet ist. Beispielsweise kann das zweite Drehlager zwischen der Wellendichtung, insbesondere einem Radialwellendichtring, und der Pumpenkammer angeordnet sein. Die Wellendichtung kann beispielsweise zwischen dem zweiten Drehlager oder der Pumpenkammer einerseits und der Umgebung oder dem Entlastungsraum oder der Verbindungsstruktur andererseits, angeordnet sein. Dadurch kann die Pumpenkammer bzw. das zweite Drehlager in Bezug auf die Umgebung oder den Entlastungsraum abgedichtet werden. Insbesondere kann die Bohrung in einen Bereich an den Außenumfang der Antriebswelle münden, der zwischen der Wellendichtung und dem zweiten Drehlager angeordnet ist. Durch die in den Bereich zwischen dem Rotor oder der Pumpenkammer und der Wellendichtung mündende Bohrung kann eine Druckentlastung erzielt werden, um den Radialwellendichtring zu entlasten und somit einen Verschleiß des Radialwellendichtrings zu verringern. Um die Dichtwirkung der Wellendichtung durch eine solche Bohrung nicht zu beeinträchtigen oder aufzuheben, kann beispielsweise ein Siphon, eine Siphonstruktur oder Ähnliches gebildet sein. Vorzugsweise ist die Wellendichtung axial zwischen der ersten Öffnung und der zweiten Öffnung des Durchgangs, insbesondere axial zwischen dem zweiten Drehlager und der zweiten Öffnung des Durchgangs, angeordnet.

Beispielsweise kann auf der Seite des zweiten Gehäuseteils, welche von der Pumpenkammer abgewandt ist, der Entlastungsraum gebildet oder die Umgebung der Pumpe oder des Pumpeneinsatzes angeordnet sein, wobei der Entlastungsraum bzw. die Umgebung angepasst ist, das Antriebselement bzw. deren Nabe, mit welcher die Verbindungsstruktur verbindbar ist, aufzunehmen.

Beispielsweise kann die an die Verbindungsstruktur mündende Bohrung die zweite Öffnung sein. Bevorzugt ist jedoch, dass die zweite Öffnung an ein zweites Ende der Antriebswelle mündet, d.h. an die das zweite Ende bildende Stirnseite der Antriebswelle. Die weiter oben beschriebene mindestens eine Querbohrung kann zusätzlich zu der zweiten Öffnung vorgesehen sein.

In Ausführungsformen kann der Entlastungsraum oder die Umgebung mit einem Vorratsbehälter oder der Saugseite, insbesondere einem Saugraum der Pumpe, zur Rückführung von Fluid aus dem Entlastungsraum oder der Umgebung verbunden sein. Hierfür kann beispielsweise ein Kanal vorgesehen sein, der von dem Entlastungsraum oder der Umgebung zu dem Vorratsbehälter oder dem Saugraum führt. Ferner ist bevorzugt, dass der Entlastungsraum oder die Umgebung mit der Atmosphäre in der die Pumpe betrieben wird, druckausgleichend verbunden ist, so dass während des Betriebs der Pumpe im Entlastungsraum oder der Umgebung Atmosphärendruck oder im Wesentlichen Atmosphärendruck herrscht.

Beispielsweise kann die Pumpe einen Pumpeneinsatz aufweisen, der zumindest die Antriebswelle mit dem Rotor und das erste Gehäuseteil und das zweite Gehäuseteil, vorzugsweise auch den Konturring umfasst. Der Pumpeneinsatz kann in dem von dem Aufnahmegehäuse gebildeten, beispielsweise topfförmigen, Aufnahmeraum als Einheit eingesetzt werden oder eingesetzt sein.

Beispielsweise kann ein Getriebe die erfindungsgemäße Pumpe aufweisen. Das Getriebe kann ein Getriebegehäuse und/oder das Aufnahmegehäuse aufweisen. Beispielsweise kann das Getriebegehäuse das Aufnahmegehäuse bilden. Das Getriebegehäuse kann den Entlastungsraum oder die Umgebung der Pumpe bzw. des Pumpeneinsatzes bilden oder einfassen. Der Entlastungsraum oder die Umgebung können somit von dem Getriebegehäuse umgeben sein. Somit kann der Hohlraum über den Durchgang in den vom Getriebegehäuse umgebenen Raum, d.h. den Entlastungsraum oder die Umgebung, druckentlastet werden. An oder in dem Getriebegehäuse kann ein Vorratsbehälter, insbesondere ein Ölsumpf gebildet sein, in den das durch den Durchgang abgeführbare Fluid abgeführt werden kann. Beispielsweise kann das Getriebe oder das Getriebegehäuse eine Entlüftungseinrichtung aufweisen, die einen Druckausgleich zwischen der Atmosphäre und den vom Getriebegehäuse umgebenen Raum bewirkt. Das Getriebe kann beispielsweise eine Getriebewelle aufweisen, welche über das Antriebselement so mit der Antriebswelle der Pumpe verbunden ist, dass eine Drehung der Getriebewelle eine Drehung der Antriebswelle bewirkt.

Beispielsweise kann die Pumpe ein Dichtelement aufweisen, welches zwischen dem Pumpeneinsatz, insbesondere dem zweiten Gehäuseteil und dem Aufnahmegehäuse angeordnet ist, und den Aufnahmeraum, insbesondere einen Saugraum der Pumpe, in Bezug auf die Umgebung bzw. den Entlastungsraum abdichtet. Vorzugsweise ist dieses Dichtelement axial zwischen der ersten Öffnung und der zweiten Öffnung des Durchgangs angeordnet.

Wie bereits beschrieben, kann die Pumpe eine doppelhubige Pumpe, insbesondere eine zweiflutige Pumpe sein. Die erste Arbeitsflut kann über einen ersten Druckraum und die zweite Arbeitsflut über einen zweiten Druckraum gefördert werden. Hierzu kann die Pumpenkammer, insbesondere eine erste Förderkammer, über einen ersten Auslasskanal mit dem ersten Druckraum und, insbesondere eine zweite Förderkammer, über einen zweiten Auslasskanal mit dem zweiten Druckraum verbunden sein, wobei der erste Druckraum und der zweite Druckraum in Bezug zueinander abgedichtet sind. Beispielsweise kann eine Dichtung vorgesehen sein, welche den ersten Druckraum und den zweiten Druckraum zueinander abdichtet. Die Dichtung kann beispielsweise zwischen einer Stirnwand des, beispielsweise topfförmigen, Aufnahmeraums, der von dem Aufnahmegehäuse gebildet wird, und dem ersten Gehäuseteil angeordnet sein. Beispielsweise kann eine Dichtung vorgesehen sein, welche den ersten Druckraum umgibt und eine zweite Dichtung vorgesehen sein, welche den zweiten Druckraum umgibt. Das Aufnahmegehäuse kann einen Abführkanal für die erste Arbeitsflut aufweisen, und einen Abführkanal für die zweite Arbeitsflut aufweisen. Der erste Abführkanal kann in den ersten Druckraum münden und der zweite Abführkanal kann in den zweiten Druckraum münden.

In weiteren Ausführungen können der erste Druckraum und/oder der zweite Druckraum zwischen der Stirnwand des Aufnahmeraums und den ersten Gehäuseteil gebildet sein. Alternativ oder zusätzlich kann der Saugraum zwischen der Innenumfangswand des Aufnahmeraums und dem Pumpeneinsatz oder dem Konturring des Pumpeneinsatzes gebildet sein.

Beispielsweise kann die Pumpe ein Dichtelement aufweisen, welches zwischen dem Pumpeneinsatz, insbesondere dem ersten Gehäuseteil und dem Aufnahmegehäuse angeordnet ist, und den Saugraum in Bezug auf den Druckraum/die Druckräume abdichtet. Vorzugsweise ist dieses Dichtelement axial zwischen der ersten Öffnung und der zweiten Öffnung des Durchgangs angeordnet.

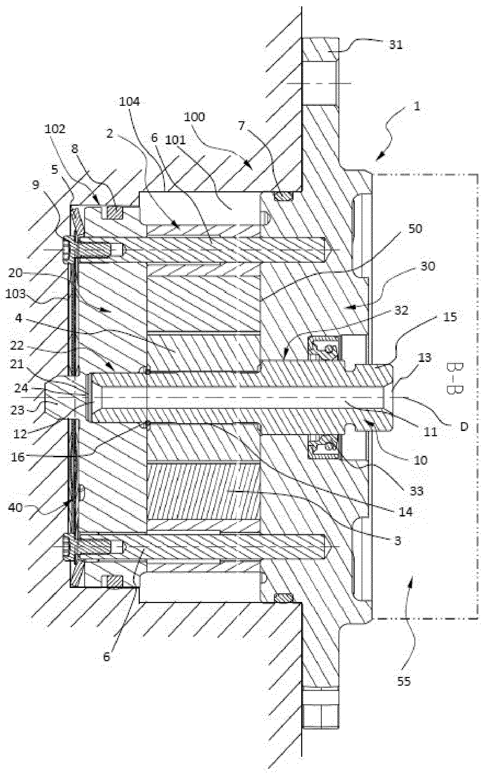

Die Erfindung wurde anhand von Ausführungen und Beispielen beschrieben. Eine Ausführungsform wird nun anhand einer Figur beschrieben. Die dabei offenbarten Merkmale bilden je einzeln und in jeglicher Merkmalskombination den Gegenstand der Ansprüche vorteilhaft weiter. Die Figur zeigt einen Schnitt durch einen in ein Aufnahmegehäuse 100 eingesetzten Pumpeneinsatz 1 entlang der Drehachse D einer Antriebswelle 10.

Der Pumpeneinsatz 1 weist ein erstes Gehäuseteil 20, welches als Druckplatte ausgestaltet ist, und ein zweites Gehäuseteil 30, welches als Montagestruktur oder Montageplatte ausgestaltet ist, auf. Zwischen den ersten und zweiten Gehäuseteilen 20, 30 ist eine Pumpenkammer 50 gebildet, die von einer eine Innenkontur bildenden Innenumfangsfläche eines Konturrings 2 umfangsseitig umgeben bzw. begrenzt wird. Das erste Gehäuseteil 20, das zweite Gehäuseteil 30 und der Konturring 2 sind bezüglich ihrer Winkelposition um die Drehachse D zueinander mittels stiftförmiger Positionierelemente 6 positioniert. Das mindestens eine stiftförmige Positionierelement 6 ist in einer Bohrung des zweiten Gehäuseteils 30 verankert. Beispielsweise kann das Positionierelement 6 in das zweite Gehäuseteil 30 eingepresst, eingeschraubt, eingelötet, eingeschweißt oder eingeklebt sein. Der Konturring 2 und das erste Gehäuseteil 20 weisen jeweils Durchgänge auf, durch welche sich das Positionierelement 6 erstreckt. Hierdurch können die ersten und zweiten Gehäuseteile 20, 30 und der Konturring 2 in Bezug zueinander um die Drehachse D positioniert bzw. winkelpositioniert werden. Ferner können mittels der Positionierelemente 6 die Gehäuseteile 2, 20, 30 zusammengehalten werden, um sie als Einheit bzw. als Pumpeneinsatz 1 handhaben zu können.

Zwischen der Stirnwand 103 des Aufnahmegehäuses 100, die den Aufnahmeraum 102 stirnseitig begrenzt, und dem ersten Gehäuseteil 20 ist eine Feder 5 angeordnet, welche das erste Gehäuseteil 20 gegen den Konturring 2 und vorzugsweise wiederum den Konturring 2 gegen das zweite Gehäuseteil 30 drückt bzw. spannt, wenn der Pumpeneinsatz 1 in das Aufnahmegehäuse 100 bzw. dessen Aufnahmeraum 102 eingesetzt ist. Die Feder 5 stützt sich an der Stirnwand 103 und dem ersten Gehäuseteil 20 ab und übt eine Kraft auf das erste Gehäuseteil 20 aus, die von der Stirnwand 103 weg gerichtet ist, insbesondere entlang der Drehachse D oder der Längsrichtung der Positionierelemente 6 weist.

Die Feder 5 kann beispielsweise als separates Teil zwischen der Stirnwand 103 und dem Pumpeneinsatz 1 beim Einbringen des Pumpeneinsatzes 1 in den Aufnahmeraum 102 eingelegt werden. In dem gezeigten Beispiel ist die Feder 5 jedoch verliersicher an dem Pumpeneinsatz 1 befestigt, so dass die Feder 5 mit dem Pumpeneinsatz 1 als Einheit handhabbar ist. Sie ist somit Teil des Pumpeneinsatzes 1. Beispielsweise kann die Feder 5 so an den Pumpeneinsatz 1 befestigt werden, wie es in der deutschen Patentanmeldung Nr. 10 2020 116 731.8 beschrieben wird.

Zwischen der Stirnwand 103 des Aufnahmeraums 102 und dem ersten Gehäuseteil 20 sind in dem gezeigten Beispiel ein erster Druckraum und ein zweiter Druckraum (in der Figur nicht sichtbar) gebildet. Die Pumpenkammer 50 ist über einen ersten Auslasskanal (in der Figur nicht sichtbar) mit dem ersten Druckraum und einen zweiten Auslasskanal (in der Figur nicht sichtbar) mit dem zweiten Druckraum verbunden. Die gezeigte Pumpe ist somit eine zweiflutige Pumpe, d.h. die Pumpe erzeugt eine erste Arbeitsflut, die aus der Pumpenkammer 50 in den ersten Druckraum ausgegeben wird, und eine zweite Arbeitsflut, die aus der Pumpenkammer 50 in den zweiten Druckraum ausgegeben wird. Der erste Druckraum und der zweite Druckraum sind in Bezug zueinander abgedichtet. Somit lassen sich unterschiedliche Fluidverbraucher oder unterschiedliche Zuführzweige zu einem gemeinsamen Fluidverbraucher mit Fluid versorgen. Ferner lassen sich dadurch optional unterschiedliche Druckniveaus im ersten und zweiten Druckraum erzeugen.

Der erste Druckraum wird von einem zwischen der Stirnwand 103 des Aufnahmeraums 102 und dem ersten Gehäuseteil 20 angeordneten Dichtelement umgeben bzw. eingefasst. Das Dichtelement liegt dichtend an dem ersten Gehäuseteil 20 und der Stirnwand 103 an.

Der zweite Druckraum wird von einem zwischen der Stirnwand 103 und dem ersten Gehäuseteil 20 angeordneten Dichtelement umgeben bzw. eingefasst. Dieses Dichtelement liegt dichtend an dem ersten Gehäuseteil 20 und der Stirnwand 103 an.

In dem gezeigten Beispiel wird die Abdichtung des ersten Druckraums und des zweiten Druckraums durch ein gemeinsames Dichtelement 40, insbesondere einer sogenannten Sickendichtung, bewerkstelligt. Grundsätzlich können aber auch separate Dichtelemente für den ersten und zweiten Druckraum vorgesehen sein oder die Abdichtung auf eine andere Weise bewerkstelligt werden.

Vorteilhaft kann das Dichtelement 40 beispielsweise mittels in ein Innengewinde der Positionierelemente 6 eingeschraubte Schraubenbolzen an den Positionierelementen 6 bzw. an dem Pumpeneinsatz 1 verliersicher befestigt sein. Das Dichtelement 40 kann beispielsweise so ausgebildet sein, wie es in den deutschen Patentanmeldungen 10 2019 132 729.6 und 10 2020 116 731.8 beschrieben wird.

Zwischen einer Innenumfangswand 104 des Aufnahmeraums 102 und dem Gehäuseeinsatz 1, insbesondere dem Konturring 2 ist ein Saugraum 101 gebildet, der sich ringförmig um den Pumpeneinsatz 1 bzw. den Konturring 2 erstreckt. Die Pumpe ist angepasst, Fluid aus dem Saugraum über einen ersten Saugkanal (in der Figur nicht sichtbar) über die Pumpenkammer 50, insbesondere eine in der Pumpenkammer gebildete erste Förderkammer, und den ersten Auslasskanal in dem ersten Druckraum zu fördern (erste Arbeitsflut). Ferner ist die Pumpe angepasst, Fluid aus dem Saugraum 101 über einen zweiten Saugkanal (in der Figur nicht sichtbar), die Pumpenkammer 50, insbesondere eine in der Pumpenkammer 50 gebildete zweite Förderkammer, und den zweiten Auslasskanal in den zweiten Druckraum zu fördern (zweite Arbeitsflut).

Der Saugraum 101 ist zwischen einem ersten Dichtring 8 und einem zweiten Dichtring 7 angeordnet. Der Dichtring 8 ist zwischen der Umfangswand 104 des Aufnahmeraums 102 und dem ersten Gehäuseteil 20 angeordnet. Das erste Gehäuseteil 20 weist eine über den Außenumfang des ersten Gehäuseteils 20 umlaufende Ringnut auf, in der der Dichtring 8 angeordnet ist. Der Dichtring 8 liegt dichtend an der Innenumfangswand 104 und dem ersten Gehäuseteil 20, insbesondere dem Nutgrund der Ringnut an. Zwischen der Innenumfangswand 104 und dem zweiten Gehäuseteil 30 ist der Dichtring 7 angeordnet. Der Dichtring 7 ist in einer über den Außenumfang des zweiten Gehäuseteils 30 umlaufenden Ringnut angeordnet. Der Dichtring 7 liegt dichtend an der Innenumfangswand 104 und dem zweiten Gehäuseteil 30, insbesondere dem Nutgrund der Ringnut an.

Eine Antriebswelle 10 (Pumpenwelle) ist mittels eines ersten Drehlagers 22, welches als Gleitlager, insbesondere in einem Sackloch oder einer Sackbohrung, ausgeführt ist, an dem ersten Gehäuseteil 20 und mittels eines zweiten Drehlagers 32, welches als Gleitlager ausgeführt ist, an dem zweiten Gehäuseteil 30 um die Drehachse D drehbar gelagert. Ein Rotor 4, der mit Förderelementen 3 in der Pumpenkammer 50 angeordnet ist, ist mittels einer Welle-Nabe-Verbindung 14 um die Drehachse D verdrehfest mit der Antriebswelle 10 verbunden bzw. gefügt, so dass sich der Rotor 4 mit der Antriebswelle 10 im Betrieb mitdreht. Der Rotor 4 weist Führungsschlitze auf, in welchen die als Flügel ausgebildeten Förderelemente 3 angeordnet sind. Die Förderelemente 3 gleiten während des Betriebs an einer Innenkontur bzw. Innenumfangsfläche des Konturrings 2 entlang. Da die Pumpe zweiflutig bzw. doppelhubig ausgebildet ist, ist die Innenkontur so ausgebildet, dass die Flügel 3 bei einer vollen Umdrehung des Rotors 4 zweimal aus den schlitzförmigen Führungen aus und zweimal in die schlitzförmigen Vertiefungen einfahren.

Die Antriebswelle 10 weist einen Durchgang 11 auf, der insbesondere als Druckentlastungskanal wirkt. Alternativ zu der in der Figur beschriebenen Ausführungsform kann der als Druckentlastungskanal wirkende Durchgang anderweitig ausgeführt sein, beispielsweise indem das erste Gehäuseteil 20, der Konturring 2 und/oder das Positionierelement 6 und das zweite Gehäuseteil 30 den Durchgang bilden. Der Durchgang 11 weist eine erste Öffnung 12 am ersten Ende der Antriebswelle 10, welches in dem ersten Gehäuseteil 20, insbesondere dem Sackloch, angeordnet ist, und eine zweite Öffnung 13 am zweiten Ende der Antriebswelle 10 auf. Das erste Drehlager 22 ist zwischen der Pumpenkammer 50 und der ersten Öffnung 12 bzw. einem Hohlraum 21 angeordnet. Der Hohlraum 21 ist zwischen dem Grund der Sackbohrung, der dem ersten Ende der Antriebswelle 10 gegenüberliegt, und dem ersten Ende der Antriebswelle 10 gebildet. Der Durchgang 11 mündet mit seiner ersten Öffnung 12 in den Hohlraum 21. Ferner mündet der Durchgang 11 mit der zweiten Öffnung 13 auf die Seite des zweiten Gehäuseteils 30, welche von der Pumpenkammer 50 abgewandt ist. Durch diese Anordnung wird erreicht, dass Druckfluid aus der Pumpenkammer 50, welches beispielsweise als sogenanntes Leckagefluid über das erste Drehlager 22 in den Hohlraum 21 fließt, über den Durchgang 11 abgeführt wird, beispielsweise in einen Entlastungsraum 55, der in der Figur mit einer Strichzweipunktlinie angedeutet ist und beispielsweise von einem Getriebegehäuse, welches insbesondere auch das Aufnahmegehäuse 100 bildet, eingefasst ist. Hiermit wird erreicht, dass sich in dem Hohlraum 21 kein Druck aufbauen kann, der einen Axialschub auf die Antriebswelle 15 ausüben kann. Wäre der Durchgang 11 nicht vorhanden, bestünde die Gefahr, dass sich in dem Hohlraum 21 ein Druck aufbaut, der einen Axialschub auf die Antriebswelle 15 ausüben würde, was zu erhöhter Reibung, erhöhtem Verschleiß und verringertem Wirkungsgrad der Pumpe führen würde. Mittels des Durchgangs 11 werden somit der Verschleiß und die Reibung verringert und der Wirkungsgrad erhöht. Das zweite Ende der Antriebswelle 10 ist in dem Entlastungsraum 55 angeordnet. Die Antriebswelle 10 weist auf der Seite des zweiten Gehäuseteils 30, welche der Pumpenkammer 50 abgewandt ist, eine Verbindungsstruktur 15 auf. Die Verbindungstruktur 15 ist angepasst, mit einer Nabe eines Antriebselements (in der Figur nicht dargestellt) verbunden zu werden. Bei dem Antriebselement kann es sich um ein Zahnrad, ein Ritzel, eine Riemenscheibe oder ein Getriebeelement beispielsweise eines Planetengetriebes, wie z.B. einen Planetenträger, handeln. Die Nabe bildet mit der Verbindungsstruktur 15 eine Welle-Nabe-Verbindung. Das Antriebselement kann so mit einer Getriebewelle des Getriebes gekoppelt sein, dass eine Drehung der Getriebewelle eine Drehung des Antriebswelle der Pumpe bewirkt.

Die Nabe, insbesondere das Antriebselement kann in dem Entlastungsraum 55 angeordnet sein oder werden. Der Entlastungsraum 55 ist auf der Seite des zweiten Gehäuseteils 30 angeordnet, welche von der Pumpenkammer 50 abgewandt ist. Der Entlastungsraum 55 kann beispielsweise mittels eines Kanals mit einem Vorratsbehälter oder Reservoir oder alternativ mit der Saugseite, insbesondere dem Saugraum 101 der Pumpe, zur Rückführung von Fluid aus dem Entlastungsraum 55 verbunden sein. Alternativ oder zusätzlich kann in den Entlastungsraum abgeführtes Fluid mittels Schwerkraft in den Vorratsbehälter abgeführt werden, beispielsweise dadurch, dass der Vorratsbehälter, beispielsweise eine Ölwanne, bezogen auf die Schwerkraftrichtung tiefer liegt, als die zweite Öffnung und die zweite Öffnung 13 und der Vorratsbehälter fluidkommunizierend verbunden sind.

In dem Entlastungsraum 55, insbesondere in dem vom Getriebegehäuse eingefassten Raum, herrscht vorzugsweise Atmosphärendruck. Der Durchgang 11 bewirkt ferner, dass in dem Zwischenraum 21 der gleiche Druck oder zumindest im Wesentlichen der gleiche Druck herrscht, wie im Entlastungsraum 55, d.h. vorzugsweise Atmosphärendruck.

In oder an dem zweiten Gehäuseteil 30 ist eine Wellendichtung 33, insbesondere ein Radialwellendichtring, aufgenommen, der dichtend an der Antriebswelle 10 anliegt. Die Wellendichtung 33 ist zwischen dem zweiten Drehlager 32 und der Verbindungsstruktur 15 angeordnet. Alternativ oder zusätzlich ist das zweite Drehlager 32 zwischen der Pumpenkammer 50 und der Wellendichtung 33 angeordnet.

In Weiterbildungen der in der Figur gezeigten Ausführungsform können eine oder mehrere Querbohrungen, d. h. Bohrungen, die quer zur Längsrichtung des Durchgangs 11 oder der Drehachse D angeordnet sind, in der Antriebswelle 10 vorgesehen sein. Beispielsweise kann eine Querbohrung im Bereich der Welle-Nabe-Verbindung 14 vorgesehen sein. Die Querbohrung mündet in die Welle-Nabe-Verbindung 14 und in den Durchgang 11. Je nach Druckverhältnissen kann dadurch ein Leckage-Fluidstrom aus der Pumpenkammer 50 über die Welle-Nabe-Verbindung 14 und die Querbohrung in den Durchgang 11 und von dem Durchgang 11 in den Entlastungsraum 55 erzeugt werden, wodurch Reibrost und Verschleiß in der Welle-Nabe-Verbindung verringert oder verhindert werden kann. Je nach Druckverhältnissen kann durch diese Querbohrung alternativ Leckagefluid aus dem Zwischenraum 21 über den Durchgang 11 und die Querbohrung an die Welle-Nabe-Verbindung 14 gebracht werden.

Alternativ oder zusätzlich kann zwischen der Pumpenkammer 50 und der Wellendichtung 33 eine Querbohrung vorgesehen sein, welche an den Außenumfang der Antriebswelle 10 und den Durchgang 11 mündet. Beispielsweise kann die Querbohrung in einen Bereich an den Außenumfang münden, welcher zwischen dem zweiten Drehlager 32 und der Stelle, an welcher die Wellendichtung 33 dichtend an der Antriebswelle 10 anliegt, angeordnet ist. Dadurch kann bewirkt werden, dass einerseits die Wellendichtung 33 druckentlastet wird und andererseits der Durchfluss von Leckagefluid aus dem Pumpenraum 50 durch das zweite Drehlager 32 erhöht wird, wodurch das zweite Drehlager 32 besser geschmiert bzw. gekühlt werden kann. Auch der Fluidfluss mit Leckagefluid durch das erste Drehlager 22 bewirkt eine Schmierung bzw. Kühlung des ersten Drehlagers 22.

Alternativ oder zusätzlich kann eine Querbohrung im Bereich der Verbindungsstruktur 15 vorgesehen sein, wobei die Querbohrung in die Verbindungsstruktur 15 und den Durchgang 11 mündet. Dadurch kann bewirkt werden, dass durch den Durchgang 11 abgeführtes Leckagefluid über die Querbohrung an die Verbindungsstruktur 15 und somit an die Welle-Nabe-Verbindung zwischen der Nabe des Antriebselements und der Verbindungsstruktur 15 gebracht wird. Somit wird Verschleiß bzw. Reibrost an der Verbindungsstruktur bzw. der Welle-Nabe-Verbindung verringert oder sogar verhindert.

Das zweite Gehäuseteil 30 ist dazu ausgebildet, dass der Pumpeneinsatz 1 an dem Aufnahmegehäuse 100 befestigt werden kann. Das zweite Gehäuseteil 30 weist einen Befestigungsflansch 31 auf, der eine oder mehrere Bohrungen umfasst, um die Befestigung des zweiten Gehäuseteils 30 mittels Schraubenbolzen an dem Aufnahmegehäuse 100 zu ermöglichen. In dem gezeigten Beispiel ist die Längsrichtung der Bohrungen des Befestigungsflansches 31 parallel zur Drehachse D. Der Befestigungsflansch 31 kann zwischen einem Kopf des in das Aufnahmegehäuse 100 eingeschraubten Schraubenbolzens und dem Aufnahmegehäuse 100 eingeklemmt sein oder werden.

Das erste Gehäuseteil 20 weist optional einen Zapfen 23 auf, der von der Stirnfläche des ersten Gehäuseteils 20 ragt, die der Pumpenkammer 50 abgewandt ist bzw. der Stirnwand 103 zugewandt ist. Der Zapfen 23 kann dazu dienen, das Dichtelement 40 zu zentrieren. Alternativ oder zusätzlich kann der Zapfen 23 dazu dienen, den Pumpeneinsatz 1 oder das erste Gehäuseteil 20 an dem Aufnahmegehäuse 100 zu zentrieren. Das Aufnahmegehäuse 100 kann eine Bohrung mit einer Innenumfangsfläche aufweisen, an den die Außenumfangsfläche des Zapfens 23 zentriert ist.

Das Aufnahmegehäuse 100 kann ferner einen Kanal aufweisen, der in den ersten Druckraum mündet und über den die erste Arbeitsflut zu dem Verbraucher abströmen kann. Ferner kann das Aufnahmegehäuse einen Kanal aufweisen, der in den zweiten Druckraum mündet und über den zweite Arbeitsflut an den entsprechenden Fluidverbraucher abströmen kann.

Der Rotor 4 und die Verbindungsstruktur 15 sind zueinander entlang der Drehachse D verschiebefest gefügt, beispielsweise mittels eines Sicherungselements 16, welches beispielsweise als Axialwellensicherungsring ausgeführt sein kann, der auf die Antriebswelle aufgesteckt ist. Der Rotor 4 kann zwischen einer Stufe der Antriebswelle 10 und dem auf der Antriebswelle 10 befestigten Sicherungselement 16 angeordnet bzw. eingefasst sein.

### Bezugszeichenliste

- 1: Pumpeneinsatz
- 2: Konturring
- 3: Förderelement / Flügel
- 4: Rotor
- 5: Feder
- 6: Positionierelement
- 7: (erstes) Dichtelement / Dichtring
- 8: (zweites) Dichtelement / Dichtring
- 9: Befestigungselement

- 10: Antriebswelle
- 11: Durchgang / Bohrung /Druckentlastungskanal
- 12: (erste) Öffnung
- 13: (zweite) Öffnung
- 14: Welle-Nabe-Verbindung
- 15: Verbindungsstruktur
- 16: Sicherungselement

- 20: erstes Gehäuseteil/Druckplatte
- 21: Hohlraum
- 22: erstes Drehlager
- 23: Zapfen
- 24: Grund (oder Boden) eines Sacklocks

- 30: zweites Gehäuseteil/Montageplatte
- 31: Befestigungsflansch
- 32: zweites Drehlager
- 33: Wellendichtung

- 40: Dichtelement / Sickendichtung

- 50: Pumpenkammer

- 55: Entlastungsraum / Umgebung

- 100: Aufnahmegehäuse
- 101: Saugraum
- 102: Aufnahmeraum
- 103: Stirnwand
- 104: Innenumfangswand

- D: Drehachse

## Patentansprüche

1. Pumpe, umfassend:
• eine Antriebswelle (10) mit einem Rotor (4),
• ein erstes Gehäuseteil (20) und ein zweites Gehäuseteil (30), zwischen denen eine Pumpenkammer (50) gebildet ist, in der der Rotor (4) angeordnet ist,
• ein Drehlager (22), über das die Antriebswelle (4) um ihre Drehachse (D) drehbar an dem ersten Gehäuseteil (20) gelagert ist,
• und einen Durchgang (11) mit einer ersten Öffnung (12) und einer zweiten Öffnung (13),
• wobei das Drehlager (22) zwischen der Pumpenkammer (50) und der ersten Öffnung (12) angeordnet ist und der Durchgang (11) mit der zweiten Öffnung (13) auf die Seite des zweiten Gehäuseteils (30) mündet, welche von der Pumpenkammer (50) abgewandt ist,
**dadurch gekennzeichnet, dass**
• das zweite Gehäuseteil (30) eine Befestigungseinrichtung zur Befestigung des zweiten Gehäuseteils (30) an einem Aufnahmegehäuse (100), in welches die Pumpe einsetzbar ist, aufweist.

2. Pumpe nach dem vorhergehenden Anspruch, wobei das zweite Gehäuseteil (30) eine Montageplatte ist und/oder einen Befestigungsflansch (31) zur Befestigung des zweiten Gehäuseteils (30) an dem Aufnahmegehäuse (100) aufweist.

3. Pumpe nach einem der vorhergehenden Ansprüche, wobei die Antriebswelle (10) den Durchgang (11) mit der ersten Öffnung (12) und der zweiten Öffnung (13) aufweist.

4. Pumpe nach Anspruch 1 oder 2, wobei wenigstens eines aus erstem Gehäuseteil (20), zweitem Gehäuseteil (30), einem Konturring (2) oder einem Positionierelement (6) den Durchgang (11) oder einen Teil davon aufweist, wobei bevorzugt ist, dass das erste Gehäuseteil (20) die erste Öffnung (12) und das zweite Gehäuseteil (30) oder das Positionierelement (6) die zweite Öffnung (13) aufweist.

5. Pumpe nach einem der vorhergehenden Ansprüche, ferner umfassend einen Hohlraum (21), der zwischen einem Grund eines von dem ersten Gehäuseteil (20) gebildeten Sacklochs und einem ersten, in dem ersten Gehäuseteil (20) angeordneten Ende einer Antriebswelle (10) gebildet ist, wobei der Durchgang (11) mit seiner ersten Öffnung (12) in den Hohlraum (21) mündet, wobei bevorzugt ist, dass das erste Drehlager (12) zwischen der Pumpenkammer (50) und dem Hohlraum (21) angeordnet ist.

6. Pumpe nach einem der vorhergehenden Ansprüche, wobei die zweite Öffnung (13) in die Umgebung der Pumpe oder eines Pumpeneinsatzes (1), insbesondere außerhalb eines Aufnahmeraums (102) des Aufnahmegehäuses (100), in welcher der Pumpeneinsatz (1) aufgenommen ist, mündet.

7. Pumpe nach einem der vorhergehenden Ansprüche, wobei die Antriebswelle (10) auf der Seite des zweiten Gehäuseteils (30), welche der Pumpenkammer (50) abgewandt ist, eine Verbindungsstruktur (15), welche angepasst ist, mit einer Nabe verbunden zu werden, aufweist.

8. Pumpe nach dem vorhergehenden Anspruch, wobei auf der Seite des zweiten Gehäuseteils (30), welche von der Pumpenkammer (50) abgewandt ist, eine Umgebung der Pumpe oder des Pumpeinsatzes (1) oder ein Entlastungsraum (55) gebildet ist, wobei die Umgebung oder der Entlastungsraum (55) angepasst ist, die Nabe, mit welcher die Verbindungsstruktur (15) verbindbar ist, aufzunehmen, wobei der Durchgang (11) mit der zweiten Öffnung (13) in die Umgebung oder den Entlastungsraum (55) mündet.

9. Pumpe nach dem vorhergehenden Anspruch, wobei der Entlastungsraum (55) mit einem Vorratsbehälter oder der Saugseite, insbesondere einem Saugraum (101) der Pumpe, zur Rückführung von Fluid aus dem Entlastungsraum (55) verbunden ist.

10. Pumpe nach dem vorhergehenden Anspruch, wobei der Entlastungsraum (55) mit der Atmosphäre verbunden ist, sodass während des Betriebs der Pumpe im Entlastungsraum (55) Atmosphärendruck herrscht.

11. Pumpe nach einem der vorhergehenden Ansprüche, wobei die Pumpe eine mehrhubige, insbesondere doppelhubige, und/oder mehrflutige, insbesondere zweiflutige, Pumpe ist.

12. Pumpe nach einem der vorhergehenden Ansprüche, ferner umfassend einen ersten Druckraum und einen zweiten Druckraum, wobei die Pumpenkammer (50) über einen ersten Auslasskanal mit dem ersten Druckraum und einen zweiten Auslasskanal mit dem zweiten Druckraum verbunden ist, wobei der erste Druckraum und der zweite Druckraum in Bezug zueinander abgedichtet sind, wobei bevorzugt ist, dass der erste Druckraum und/oder der zweite Druckraum zwischen einer Stirnwand (103) des Aufnahmeraums (102) und dem ersten Gehäuseteil (20) gebildet sind und/oder ein Saugraum (101) zwischen einer Umfangswand (104) des Aufnahmeraums (102) und einem Pumpeneinsatz (1) oder einem Konturring (2) gebildet ist.

13. Pumpe nach einem der vorhergehenden Ansprüche, ferner umfassend ein zweites Drehlager (32), über welches die Antriebswelle (4) um ihre Drehachse (D) drehbar an dem zweiten Gehäuseteil (30) gelagert ist, und eine Wellendichtung (33), wobei das zweite Drehlager (32) zwischen der Wellendichtung (33) und der Pumpenkammer (50) angeordnet ist.

14. Pumpe nach einem der vorhergehenden Ansprüche, wobei die Antriebswelle (10) mit dem Rotor (4) und das erste Gehäuseteil (20) und zweite Gehäuseteil (30) Bestandteile eines Pumpeneinsatzes (1) sind, der in den von dem Aufnahmegehäuse (100) gebildeten Aufnahmeraum (102) als Einheit einsetzbar oder eingesetzt ist.

15. Getriebe, umfassend die Pumpe nach einem der vorhergehenden Ansprüche, ein Getriebegehäuse und eine Getriebewelle, welche über ein Antriebselement mit der Antriebswelle (10) der Pumpe so verbunden ist, dass eine Drehung der Getriebewelle eine Drehung der Antriebswelle (10) bewirkt, wobei das Getriebegehäuse einen Entlastungsraum (55) einfasst und/oder einen Aufnahmeraum (102) bildet, wobei bevorzugt ist, dass die Pumpe einen Pumpeneinsatz (1) aufweist, der in dem Aufnahmeraum (102) angeordnet ist, wobei der Aufnahmeraum (102) in Bezug auf die Umgebung oder den Entlastungsraum (55) abgedichtet ist.

## Claims

1. A pump, comprising:
• a drive shaft (10) comprising a rotor (4);
• a first housing part (20) and a second housing part (30), between which a pump chamber (50) is formed, in which the rotor (4) is arranged;
• a rotary bearing (22) via which the drive shaft (10) is mounted on the first housing part (20) such that it can rotate about its rotational axis (D);
• and a passage (11) comprising a first opening (12) and a second opening (13),
• wherein the rotary bearing (22) is arranged between the pump chamber (50) and the first opening (12), and the second opening (13) of the passage (11) emerges onto the side of the second housing part (30) which faces away from the pump chamber (50), **characterised in that**
• the second housing part (30) comprises a fastening device for fastening the second housing part (30) to an accommodating housing (100) into which the pump can be inserted.

2. The pump according to the preceding claim, wherein the second housing part (30) is a fitting plate and/or comprises a fastening flange (31) for fastening the second housing part (30) to the accommodating housing (100).

3. The pump according to any one of the preceding claims, wherein the drive shaft (10) comprises the passage (11) comprising the first opening (12) and the second opening (13).

4. The pump according to claim 1 or 2, wherein at least one of the first housing part (20), the second housing part (30), a contour ring (2) and a positioning element (6) comprises the passage (11) or part of the passage, wherein preferably the first housing part (20) comprises the first opening (12), and the second housing part (30) or the positioning element (6) comprises the second opening (13).

5. The pump according to any one of the preceding claims, further comprising a hollow space (21) which is formed between a base of a blind hole formed by the first housing part (20) and a first end of a drive shaft (10) which is arranged in the first housing part (20), wherein the first opening (12) of the passage (11) emerges into the hollow space (21), wherein the rotary bearing (22) is preferably arranged between the pump chamber (50) and the hollow space (21).

6. The pump according to any one of the preceding claims, wherein the second opening (13) emerges into the environment of the pump or a pump insert (1), in particular outside an accommodating space (102) of the accommodating housing (100) in which the pump insert (1) is accommodated.

7. The pump according to any one of the preceding claims, wherein the drive shaft (10) comprises a connecting structure (15), which is adapted to be connected to a hub, on the side of the second housing part (30) which faces away from the pump chamber (50).

8. The pump according to the preceding claim, wherein an environment of the pump or pump insert (1) or a relief space (55) is formed on the side of the second housing part (30) which faces away from the pump chamber (50), wherein the environment or the relief space (55) is adapted to accommodate the hub to which the connecting structure (15) can be connected, wherein the second opening (13) of the passage (11) emerges into the environment or the relief space (55).

9. The pump according to the preceding claim, wherein the relief space (55) is connected to a reservoir or to the suction side, in particular a suction space (101) of the pump, in order to feed fluid back from the relief space (55).

10. The pump according to the preceding claim, wherein the relief space (55) is connected to the atmosphere, such that atmospheric pressure prevails in the relief space (55) while the pump is in operation.

11. The pump according to any one of the preceding claims, wherein the pump is a multi-stroke pump, in particular a dual-stroke pump, and/or a multi-flux pump, in particular a dual-flux pump.

12. The pump according to any one of the preceding claims, further comprising a first pressure space and a second pressure space, wherein the pump chamber (50) is connected to the first pressure space via a first outlet channel and to the second pressure space via a second outlet channel, wherein the first pressure space and the second pressure space are sealed off in relation to each other, wherein the first pressure space and/or the second pressure space is/are preferably formed between an end-facing wall (103) of the accommodating space (102) and the first housing part (20), and/or a suction space (101) is preferably formed between a circumferential wall (104) of the accommodating space (102) and a pump insert (1) or a contour ring (2).

13. The pump according to any one of the preceding claims, further comprising a second rotary bearing (32), via which the drive shaft (10) is mounted on the second housing part (30) such that it can rotate about its rotational axis (D), and a shaft gasket (33), wherein the second rotary bearing (32) is arranged between the shaft gasket (33) and the pump chamber (50).

14. The pump according to any one of the preceding claims, wherein the drive shaft (10) together with the rotor (4), and the first housing part (20) and second housing part (30), are components of a pump insert (1) which is or can be inserted as a unit into the accommodating space (102) formed by the accommodating housing (100).

15. A gearbox comprising the pump according to any one of the preceding claims, a gear housing and a gear shaft which is connected via a drive element to the drive shaft (10) of the pump, such that rotating the gear shaft causes the drive shaft (10) to rotate, wherein the gear housing encloses the relief space (55) and/or forms an accommodating space (102), wherein the pump preferably comprises a pump insert (1) which is arranged in the accommodating space (102), wherein the accommodating space (102) is sealed off in relation to the environment or the relief space (55).

## Revendications

1. Pompe comprenant :
• un arbre d'entraînement (10) comprenant un rotor (4) ;
• une première partie de boîtier (20) et une seconde partie de boîtier (30), entre lesquelles est formée une chambre de pompe (50) dans laquelle le rotor (4) est disposé ;
• un palier rotatif (22) par lequel l'arbre d'entraînement (10) est monté de manière rotative autour de son axe de rotation (D) sur la première partie de boîtier (20) ;
• et un passage (11) présentant une première ouverture (12) et une seconde ouverture (13),
• le palier rotatif (22) étant disposé entre la chambre de pompe (50) et la première ouverture (12), la seconde ouverture (13) du passage (11) débouchant sur le côté de la seconde partie de boîtier (30) opposé à la chambre de pompe (50),
**caractérisée en ce que**
• la seconde partie de boîtier (30) comprend un dispositif de fixation pour fixer la seconde partie de boîtier (30) à un boîtier de réception (100) dans lequel la pompe peut être insérée.

2. Pompe selon la revendication précédente, dans laquelle la seconde partie de boîtier (30) est une plaque de montage et / ou comprend une bride de fixation (31) pour fixer la seconde partie de boîtier (30) au boîtier de réception (100).

3. Pompe selon l'une quelconque des revendications précédentes, dans laquelle l'arbre d'entraînement (10) comprend le passage (11) présentant la première ouverture (12) et la seconde ouverture (13).

4. Pompe selon la revendication 1 ou 2, dans laquelle la première partie de boîtier (20) et / ou la seconde partie de boîtier (30) et / ou un anneau de contour (2) et / ou un élément de positionnement (6) comprend le passage (11) ou une partie du passage (11), la première partie de boîtier (20) présentant de préférence la première ouverture (12) et la seconde partie de boîtier (30) ou l'élément de positionnement (6) présentant de préférence la seconde ouverture (13).

5. Pompe selon l'une quelconque des revendications précédentes, comprenant en outre une cavité (21) formée entre une base d'un trou borgne formé par la première partie de boîtier (20) et une première extrémité d'un arbre d'entraînement (10) disposée dans la première partie de boîtier (20), la première ouverture (12) du passage (11) débouchant dans la cavité (21), le palier rotatif (22) étant de préférence disposé entre la chambre de pompe (50) et la cavité (21).

6. Pompe selon l'une quelconque des revendications précédentes, dans laquelle la seconde ouverture (13) débouche dans l'environnement de la pompe ou d'un insert de pompe (1), en particulier à l'extérieur d'un espace de réception (102) du boîtier de réception (100) dans lequel l'insert de pompe (1) est reçu.

7. Pompe selon l'une quelconque des revendications précédentes, dans laquelle l'arbre d'entraînement (10) comprend une structure de liaison (15) sur le côté de la seconde partie de boîtier (30) opposé à la chambre de pompe (50), la structure de liaison (15) étant adaptée pour être reliée à un moyeu.

8. Pompe selon la revendication précédente, dans laquelle un environnement de la pompe ou de l'insert de pompe (1) ou un espace de décharge (55) est formé sur le côté de la seconde partie de boîtier (30) opposé à la chambre de pompe (50), l'environnement ou l'espace de décharge (55) étant adapté pour recevoir le moyeu auquel la structure de liaison (15) peut être reliée, la seconde ouverture (13) du passage (11) débouchant dans l'environnement ou l'espace de décharge (55).

9. Pompe selon la revendication précédente, dans laquelle l'espace de décharge (55) est relié à un réservoir ou au côté aspiration, en particulier à un espace d'aspiration (101) de la pompe, pour renvoyer du fluide de l'espace de décharge (55).

10. Pompe selon la revendication précédente, dans laquelle l'espace de décharge (55) est relié à l'atmosphère, de sorte que la pression atmosphérique règne dans l'espace de décharge (55) lorsque la pompe est en fonctionnement.

11. Pompe selon l'une quelconque des revendications précédentes, dans laquelle la pompe est une pompe à plusieurs courses, en particulier une pompe à double course, et / ou une pompe à plusieurs flux, en particulier une pompe à deux flux.

12. Pompe selon l'une quelconque des revendications précédentes, comprenant en outre un premier espace de pression et un second espace de pression, la chambre de pompe (50) étant reliée au premier espace de pression via un premier canal de sortie et au second espace de pression via un second canal de sortie, le premier espace de pression et le second espace de pression étant étanchés l'un par rapport à l'autre, le premier espace de pression et / ou le second espace de pression étant de préférence formé(s) entre une paroi frontale (103) de l'espace de réception (102) et la première partie de boîtier (20) et / ou un espace d'aspiration (101) étant de préférence formée entre une paroi circonférentielle (104) de l'espace de réception (102) et un insert de pompe (1) ou un anneau de contour (2).

13. Pompe selon l'une quelconque des revendications précédentes, comprenant en outre : un second palier rotatif (32) par lequel l'arbre d'entraînement (10) est monté de manière rotative autour de son axe de rotation (D) sur la seconde partie de boîtier (30) ; et un joint d'arbre (33), le second palier rotatif (32) étant disposé entre le joint d'arbre (33) et la chambre de pompe (50).

14. Pompe selon l'une quelconque des revendications précédentes, dans laquelle l'arbre d'entraînement (10) comprenant le rotor (4) et la première partie de boîtier (20) et la seconde partie de boîtier (30) sont des composants d'un insert de pompe (1) inséré ou pouvant être inséré comme une unité dans l'espace de réception (102) formé par le boîtier de réception (100).

15. Transmission comprenant : la pompe selon l'une quelconque des revendications précédentes ; un boîtier de transmission ; et un arbre de transmission relié à l'arbre d'entraînement (10) de la pompe via un élément d'entraînement de sorte qu'une rotation de l'arbre de transmission provoque une rotation de l'arbre d'entraînement (10), le boîtier de transmission entourant l'espace de décharge (55) et / ou formant un espace de réception (102), la pompe comprenant de préférence un insert de pompe (1) disposé dans l'espace de réception (102), l'espace de réception (102) étant étanché par rapport à l'environnement ou à l'espace de décharge (55).
